Europäisches Patentamt

European Patent Office

Office européen des brevets

(19)

(11) Publication number : **0 467 482 B1**

(12) **EUROPEAN PATENT SPECIFICATION**

(45) Date of publication of patent specification :
06.04.94 Bulletin 94/14

(51) Int. Cl.⁵ : **A23C 9/142, A23J 1/20,
A23J 3/34**

(21) Application number : **91201898.3**

(22) Date of filing : **18.07.91**

(54) **Method of preparing a milk protein isolate.**

(30) Priority : **19.07.90 NL 9001650**

(43) Date of publication of application :
**22.01.92 Bulletin 92/04**

(45) Publication of the grant of the patent :
**06.04.94 Bulletin 94/14**

(84) Designated Contracting States :
**DE DK FR NL**

(56) References cited :
**EP-A- 0 033 686
EP-A- 0 165 105
WO-A-87/03786
FR-A- 2 367 431
GB-A- 1 362 502
NL-A- 7 603 369**

(56) References cited :
**NETHERLANDS MILK & DAIRY JOURNAL, vol.
32, no. 2, 1978, pages 80-93; J. HIDDINK et al.:
"Removal of milk salts during ultrafiltratin of
whey and buttermilk"
JOURNAL OF DAIRY SCIENCE, vol. 63, no. 2,
1980, pages 228-234; C.A. ERNSTROM et al.:
"Cheese base for processing. A high yield
product from whole milk by ultrafiltration"**

(73) Proprietor : **Verenigde Coöperatieve
Melkindustrie Coberco B.A.
Nieuwstad 69
NL-7201 NM Zutphen (NL)**

(72) Inventor : **Klarenbeek, Gijsbert
Esdoornlaan 30
NL-7421 AX Deventer (NL)**

(74) Representative : **Smulders, Theodorus A.H.J.,
Ir. et al
Vereenigde Octrooibureaux Nieuwe Parklaan
97
NL-2587 BN 's-Gravenhage (NL)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to a method of preparing a milk protein isolate from skim milk or from a mixture of skim milk and whey or whey protein concentrate.

Milk proteins are highly important. They are virtually indispensable in the composition of a large number of foods, such as sweets, bakery products and meats, in particular because of their palatability, high nutritional value and their favourable contribution to the texture of those foods. No other substances equalling milk proteins as regards properties are known for this purpose.

For different applications various milk protein products having different compositions are known, such as milk powders, whey powders and more or less purified to highly purified milk protein isolates.

Of the milk protein isolates the caseinates are most important and these proteins are particularly applied as emulsifier and stabilizer in foods like meats, soups and sauces.

The best known method of preparation for those caseinates comprises an acid precipitation of the casein proteins at a pH of 4.6, followed by washing the precipitation and redissolving the protein coagulum by increasing the pH. By using suitable bases there can be prepared sodium, potassium, ammonium and calcium caseinates.

In this method, i.e. carried out without heating, the whey proteins remain dissolved, so they are not recovered too. Since these proteins are not coprecipitated, the protein loss will be about 20%. Accordingly, a number of processes have been developed for recovering whey protein together with the caseinates as so-called total milk protein powder.

Dutch patent application 8204923 discloses a method of preparing so-called total milk protein powder, which method is not essentially different from the known method for the preparation of a so-called coprecipitate, i.e. casein together with the whey proteins. The product thus obtained proves to be poorly soluble, so that this product is not always applicable in practice.

The literature describes improvements in this known method (cf PCT/US81/01357). According to these proposals skim milk is heated and cooled at an increased pH, followed by adjusting the pH to a value of 4.6 and recovering the precipitate consisting of a coprecipitate of casein and whey protein. The product thus obtained has a solubility equal to that of sodium caseinate. Yet this method also has some disadvantages. First of all an increased yield of milk protein of 20% is not obtained. After separation of the coagulum the liberated serum still contains 0.35% protein nitrogen, which, after correction for the NPN (non-protein nitrogen), corresponds to a loss of at least 5%. Moreover, the solution of the product obtained has a relatively high viscosity, which is to be ascribed to the high degree of denaturation of the whey proteins.

NL-A-7603369 concerns a process for the removal of ionic inorganic compounds and lactose from milk protein concentrates. In this process a milk product is ultrafiltrated at a pH below the isoelectric point of the proteins in the milk product until a protein concentration of at least 11 g/100 g in the retentate is obtained. Thereafter the retentate is submitted to a diafiltration step at the same pH. The product obtained has a protein content of about 80% based on the solid matter.

In the method of the invention the pH of skim milk or a mixture of skim milk and a whey containing solution is reduced to a value between 3 and 4 at a temperature below 5°C, at this pH the product is ultrafiltrated until a concentration factor of 2.5, followed by diafiltration of the retentate in the same pH range as the ultrafiltration. After the diafiltration step the pH is increased to a value substantially within the neutral range, at which pH ultrafiltration is continued until a solids content in the retentate of at least 15% and in particular about 20%, whereby the retentate is obtained has a protein content higher than 90% based on the solid matter.

It has been found that by ultrafiltering skim milk below the isoelectric point of the milk proteins both the casein and the whey proteins can be isolated from the milk or from the mixture of milk and whey or whey concentrate at a relatively high capacity. An important advantage obtained using the method of the invention is that at a pH ranging from 3 to 4 the casein proteins are suboptimally soluble, so that the flux through the membrane can remain relatively high without the occurrence of clogging. Thus, with that high flux a concentration factor of 2.5 is obtainable. An additional advantage obtained by using the method of the invention is a very low calcium retention, so that a very low calcium content is obtained in the product.

It is observed that ultrafiltration at a low pH for the preparation of milk protein products is known per se and is described in British patent 1,362,502. The object of the method described is to improve the reconstitution properties and to prevent off-flavour owing to heating and drying a protein coagulum obtained in a classical manner. According to the method described a milk product containing precipitated casein is acidified to a pH below the isoelectric point by adding a certain amount of an acidified milk derivative. By means of ultrafiltration the protein content can be increased. The casein is then dissolved, followed by drying in a classical manner. Diafiltration is not applied. The method described here has the disadvantage that for redissolving the casein heating of the mixture is necessary, unless the pH has a very low value. This heating results in possible off-flavours, certainly if the mixture also contains whey proteins.

Further, J. Dairy Sci 63 (1980) 228-234 teaches a process for preparing a cheese base by subjecting whole milk of normal pH or acidified to pH 5.7 to an ultrafiltration step, whereby the milk is concentrated to 40% of the original milk weight. Subsequently, the milk product obtained is diafiltered at constant volume until a desired ratio of lactose to buffer capacity is established. Finally, the product is concentrated to 20% milk weight by ultrafiltration.

FR-A-2 367 431 also relates to a process for preparing a cheese base. This process requires a first acidification of milk to pH 4.3 followed by ultrafiltration at a temperature between 0 and 4°C. Consequently, the pH is adjusted to the initial pH of 6.7 and optionally further concentrated by ultrafiltration.

In the method of the invention the degree of isolation can be adjusted by applying the diafiltration after the first ultrafiltration, which is carried out at the same temperature and pH as in the first ultrafiltration. From a nutritional viewpoint KOH is preferably used to increase the pH after the first ultrafiltration. The second ultrafiltration is preferably continued until a solids content of 20%.

As observed above, the selection of the pH adjustment is highly important in the method of the invention, in particular as regards the calcium retention, the viscosity and solubility of the retentate as well as the bacteriological quality of the products obtained.

With respect to the viscosity it is observed that this is higher as the pH is lowered and as a result of this increased viscosity the capacity of the ultrafiltration process will decrease. The solubility also increases as the pH is more remote from the isoelectric point, as a result of which the capacity also decreases, which, after all, is inversely related to the solubility of the protein. An optimum pH in the range, i.e. in which the combination of the parameters partly opposing each other is optimal, is about 3.

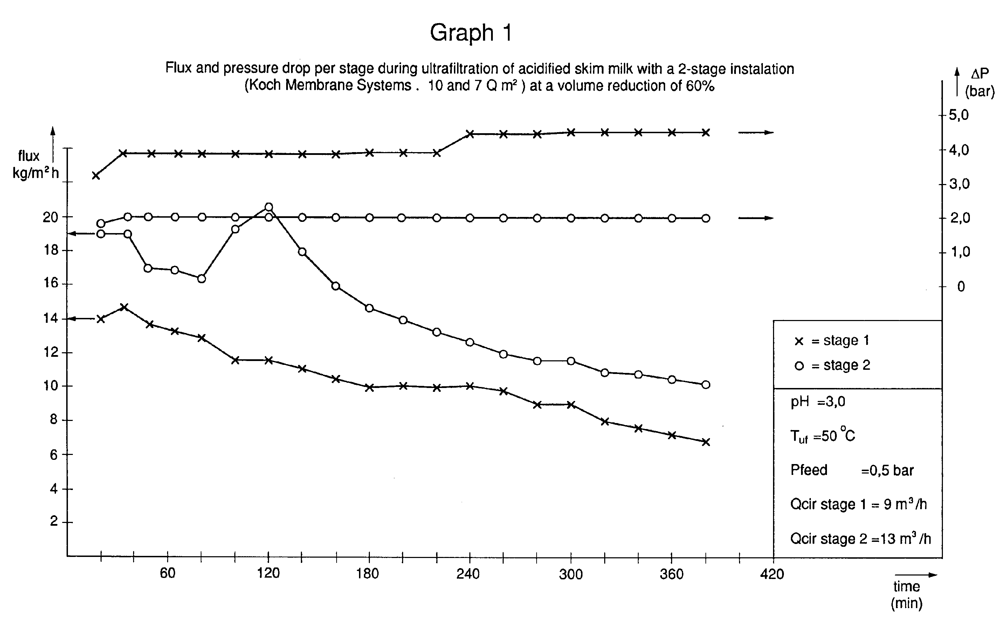

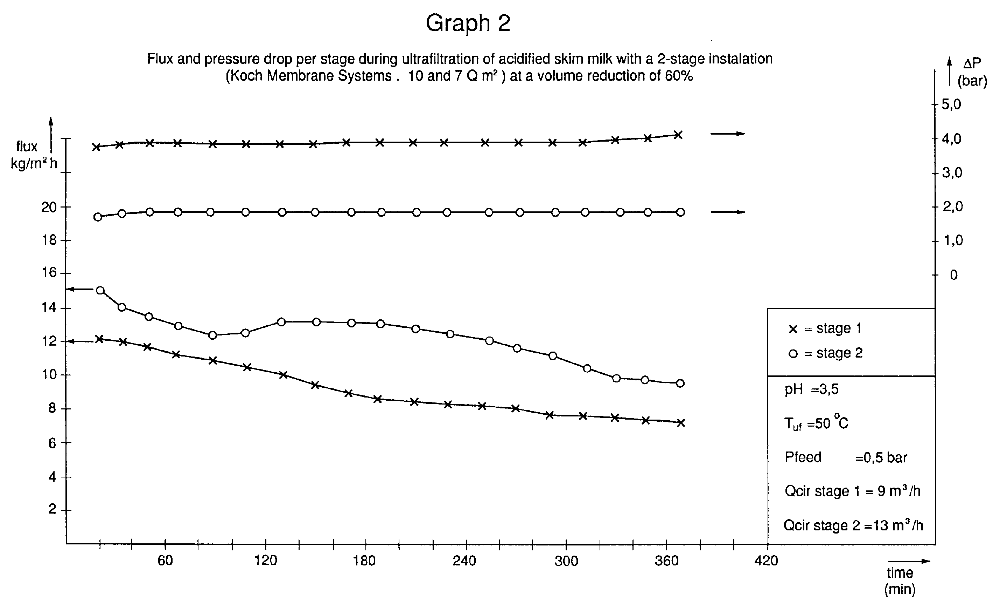

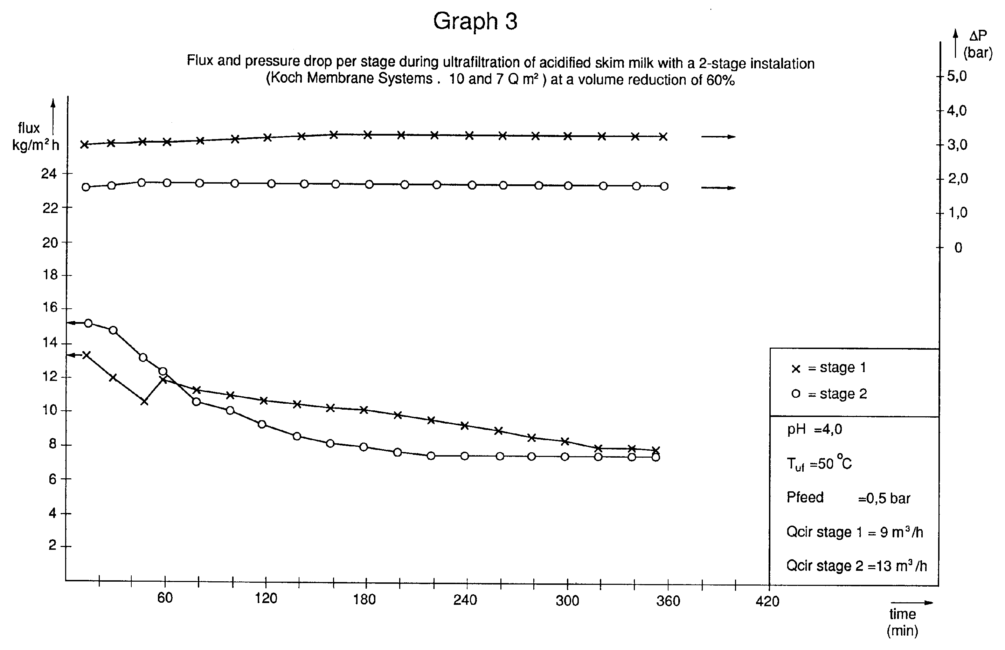

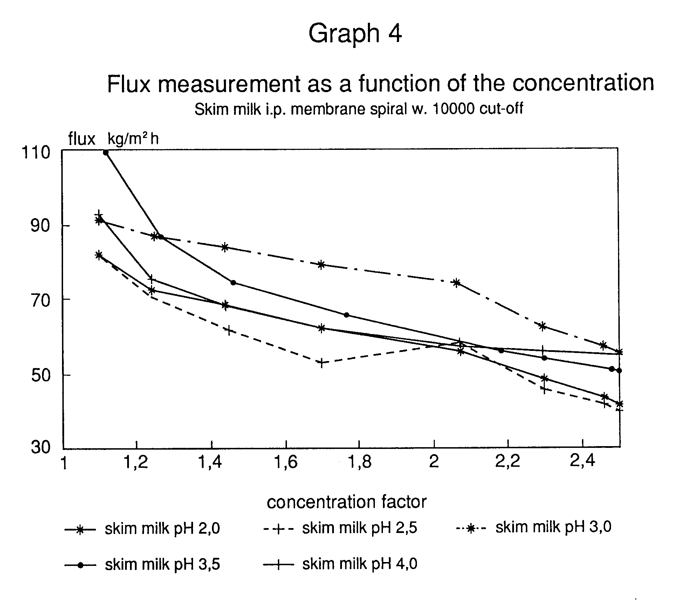

Graphs 1, 2 and 3 show the relation between the flux over the membrane and the pressure drop per stage during the ultrafiltration of acidified skim milk, at different pH's. The experiments were conducted with a two-stage Abcor system. The different flux values relate to a continuous process in which skim milk was ultrafiltered at a pH of 3, 3.5, and 4. The flux of both the first and the second stage is shown in the graphs at a concentration factor and a volume reduction of respectively 2.5 and 60%. The data show that during a life test of 6 hours at pH 3 the average flux is at least 10% higher than at both pH 3.5 and pH 4.0. Graph 4 compares the effect of the pH on the capacity in a batchwise process. In the relevant experiments the membrane permeability (flux) of skim milk was monitored at 50°C during concentration until a factor of 2.5. These results also show that during concentration a pH of about 3 is the optimum value.

Another important parameter in the method of the invention is the temperature at which the ultrafiltration is applied. The selection of this temperature is determined, on the one hand, by the material from which the membrane is made and, on the other hand, by its effect on the product properties. To most of the membranes a maximally allowable temperature ranging from 50 to 60°C applies. As regards the product properties, it applies that until a temperature of 70°C the viscosity decreases at increasing temperature, but that at a temperature of about 70°C or more the whey proteins are denatured, so that the viscosity increases.

It has further been found that in connection with the capacity of the method of the invention the pH reduction to a value below the isoelectric point of casein proteins is effected at low temperatures, in particular at a temperature ranging from 0 to 5°C. As is well known, the casein proteins do not coagulate at temperatures below 5°C (cf Brulé & Lenoir in Cheese Making Sci. and Techn. (1987) Ed. A. Eck, page 15). If, however, the pH is lowered at a temperature of 50°C, the casein proteins momentarily flocculate when passing the isoelectric point (pH about 4.5) and this flocculation does not prove to be immediately reversible at the pH of ultrafiltration (about 3). Accordingly, the result of such a pretreatment is a long dissolving time of the flocculate and/or a low capacity (flux).

By using the method of the invention there is obtained a milk protein isolate in which the casein proteins are contained in the form of a caseinate and the serum proteins in native form. The product thus obtained has a neutral flavour and a relatively low viscosity. The method further leads to a product in which both the lactose content and the calcium content is strongly reduced, in particular to respectively below 2% and 0.4%, based on the solid matter. This shows that there is thus obtained a protein isolate of excellent quality.

The method of the invention can in principle be carried out as a continuous process. By properly adjusting the capacity of the ultrafiltration process both at low and at neutral pH, skim milk can be processed in one process step to a TMP concentrate containing more than 90% protein, based on the solid matter.

According to a preferred embodiment of the method of the invention the retentate is subjected, between the ultrafiltration at low pH and that at higher pH, to a limited proteolytic hydrolysis. Preferably, use is made of a protease active at low pH, which is deactivated by increasing the pH to neutral value. The incubation may be effected in the form of a holding heater placed between the low pH stage and the neutral pH stage. It has been found that an enzyme contact time of about 15 minutes with a proteolytic enzyme of Aspergillus saitoi, commercially sold under the name of Molsin, gives a milk protein hydrolysate having excellent foaming characteristics. The invention will be further illustrated by the following Examples.

Example I

1000 kg skim milk were acidified to a pH value of 3 with stirring at a temperature of 5°C, by means of a 5N hydrochloric acid solution. By using a three-stage ultrafiltration installation with Abcor high-flow membranes having sizes of respectively 7 m2, 10 m2, and 7.5 m2 the milk was concentrated. Subsequently, the milk was concentrated in a continuous process at pH 3 and a temperature of 50°C until a concentration factor of 2.5 and then diafiltered at the same pH and temperature in a second and third stage, using a double amount of water (200%).

Thus, 480 kg retentate having a solids content of 9% and a protein content of 6.7% were obtained. This retentate was diluted twice with water and the pH was adjusted to a value of 6.5 by means of a liquor injection (5N caustic soda solution).

The dilute retentate was then concentrated until a concentration factor of 7.5 at a temperature of 50°C, using a three-stage installation.

The retentate thus obtained was directly spray dried. The powder obtained had a protein content of more than 90%, based on the solid matter, and, in addition to the casein proteins, also contained the whey proteins in undenatured form.

The method described can be schematically shown as follows:

$$
\begin{array}{c}
\text{1000 kg skim milk (1) pH 3} \\
| \\
\text{400 kg retentate (2)} \\
| \\
\text{diafiltration 200\% pH 3} \\
| \\
\text{480 kg retentate (3)} \\
| \\
\text{diluted twice with water pH 6.5} \\
| \\
\text{152 kg retentate (4)} \\
| \\
\text{30 kg powder (5)}
\end{array}
$$

In the following table the composition of the products obtained during the different phases of the method is schematically shown:

| Product ( ) | pH | % ds | % protein | % lactose | % salts | % calcium | protein/ ds |
|---|---|---|---|---|---|---|---|
| milk (1) | 3.1 | 9.35 | 3.4 | 4.8 | 0.76 | 0.12 | 34.5 |
| ret (2) | 3.1 | 14.8 | 8.4 | 5.0 | 0.76 | 0.12 | 56.9 |
| ret (3) | 6.6 | 9.0 | 6.7 | 1.75 | 0.3 | 0.04 | 74.5 |
| ret (4) | 6.5 | 18.6 | 17.1 | 0.7 | 0.8 | 0.07 | 91.9 |
| powder (5) | 6.5 | 96.7 | 88.9 | 3.4 | 4.2 | 0.37 | 91.6 |

Example II

This Example describes the preparation of a protein product having a high foamability.

By using a laboratory ultrafiltration equipment of the mark AMICON, type DH2, a spirally wound membrane S1 (cut-off = 10,000 Dalton) 2500 ml pretreated skim milk were concentrated.

The pH of the thermized milk was adjusted at a temperature of 5°C to a value of 3, using 4N hydrochloric acid. Subsequently, the temperature was increased batchwise to 50°C, followed by concentrating the milk with the above ultrafiltration device until a concentration factor of 2.5. Then the retentate was subjected to a diafiltration step, using a double amount of water (200%), at equal pH and temperature.

Subsequently, a protease active at this pH was added to this retentate (the enzyme preparation Molsin, orginating from the fungus Aspergillus saitoi) and after a certain (specified hereinafter) incubation time the protein splitting enzyme was deactivated by increasing the pH to a value of 6.5, by means of a 4N sodium hydroxide solution.

Subsequently, the retentate/substrate was diluted twice with deionized water and further ultrafiltered until a concentration factor of 3.

The method was repeated with the protease at different incubation times, i.e. of 15, 30, 60 and 130 minutes.

The retentates finally obtained were freeze dried, and they were compared as regards their foaming characteristics.

The degree of hydrolysis was determined by a TNBS method, which enabled determination of the increase in the number of broken peptide bonds (percentage DH).

In the following table the incubation time, percentage DH, and the foam expansion are given.

| Incubation time (min.) | DH (%) | Foam expansion (%) |
|---|---|---|
| 0 (blank) | 0 | 1220 |
| 15 | 0.7 | 2160 |
| 30 | 1.7 | 2760 |
| 60 | 2.5 | 2760 |
| 130 | 3.3 | 1840 |

Claims

1. A method of preparing a milk protein isolate by ultrafiltration of a non-preheated or at most low pasteurized skim milk or mixture of skim milk and a whey containing solution after reduction of the pH of this milk product to a value between 3 and 4, followed by diafiltration of the retentate in the same pH range as the ultrafiltration, characterized in that the pH reduction is carried out at a temperature below 5°C, that the ultrafiltration is continued until a concentration factor of 2.5, that after the diafiltration step the pH is increased to a value substantially within the neutral range, at which pH ultrafiltration is continued until a solids content in the retentate of at least 15% and in particular about 20%, and that a retentate is obtained having a protein content higher than 90% based on the solid matter.

2. A method as claimed in claim 1, characterized by carrying out the first ultrafiltration at pH 3.

3. A method as claimed in claims 1-2, characterized by carrying out the second ultrafiltration at pH 6.5.

4. A method as claimed in claims 1-3, characterized by carrying out the ultrafiltration at a temperature of not more than 50°C.

5. A method as claimed in claims 1-4, characterized in that between the ultrafiltration at low pH and the ultrafiltration at higher pH the retentate is subjected to an enzymatic hydrolysis.

6. A method as claimed in claim 5, characterized by carrying out the enzymatic hydrolysis with a proteolytic enzyme for about 15 minutes.

**Patentansprüche**

1. Verfahren zur Herstellung eines Milchprotein-Isolates durch Ultrafiltration einer nicht vorerhitzten oder allenfalls niedrig pasteurisierten Magermilch oder einer Mischung aus Magermilch und einer Molke enthaltenden Lösung nach Verringerung des pH-Werts dieses Milchprodukts auf einen Wert zwischen 3 und 4, mit nachfolgender Diafiltration des Retentats in demselben pH-Bereich wie die Ultrafiltration, dadurch gekennzeichnet, daß die pH-Wertverringerung bei einer Temperatur unterhalb 5°C durchgeführt wird, daß die Ultrafiltration bis zu einem Konzentrationsfaktor von 2,5 fortgesetzt wird, daß nach dem Diafiltrationsschritt der pH-Wert auf einen Wert im wesentlichen innerhalb des neutralen Bereichs erhöht wird, bei welchem pH-Wert die Ultrafiltration bis zu einem Feststoffgehalt in dem Retentat von mindestens 15 % und insbesondere etwa 20 % fortgesetzt wird, und daß ein Retentat mit einem Proteingehalt von höher als 90 % bezogen auf den Feststoff erhalten wird.

2. Verfahren nach Anspruch 1, gekennzeichnet durch Durchführung der ersten Ultrafiltration bei einem pH-Wert von 3.

3. Verfahren nach den Ansprüchen 1-2, gekennzeichnet durch Durchführung der zweiten Ultrafiltration bei einem pH-Wert von 6,5.

4. Verfahren nach den Ansprüchen 1-3, gekennzeichnet durch Durchführung der Ultrafiltration bei einer Temperatur von nicht höher als 50°C.

5. Verfahren nach den Ansprüchen 1-4, dadurch gekennzeichnet, daß zwischen der Ultrafiltration bei niedrigem pH-Wert und der Ultrafiltration bei höherem pH-Wert das Retentat einer enzymatischen Hydrolyse unterzogen wird.

6. Verfahren nach Anspruch 5, gekennzeichnet durch Durchführung der enzymatischen Hydrolyse mit einem proteolytischen Enzym für etwa 15 Minuten.

**Revendications**

1. Procédé de préparation d'un isolat de protéine de lait par ultrafiltration d'un lait écrémé non préchauffé ou au plus faiblement pasteurisé ou d'un mélange de lait écrémé et d'une solution contenant du petit-lait après réduction du pH de ce produit laitier à une valeur comprise entre 3 et 4, suivie par diafiltration du produit de rétention dans la même plage de pH que pour l'ultrafiltration, caractérisé en ce que la réduction de pH est effectuée à une température inférieure à 5 °C, en ce que l'ultrafiltration se poursuit jusqu'à un facteur de concentration de 2,5, et en ce que, après la phase de diafiltration, le pH est augmenté à une valeur qui se situe essentiellement dans la plage de pH neutre, l'ultrafiltration se poursuivant à cette valeur de pH jusqu'à ce que la teneur en matière solide du produit de rétention soit au moins de 15 %, et en particulier de 20 % environ, et que le produit de rétention obtenu ait une teneur en protéine supérieure à 90 % rapportée à la matière solide.

2. Procédé selon la revendication 1, caractérisé en ce que la première ultrafiltration est effectuée à un pH de 3.

3. Procédé selon les revendications 1 ou 2, caractérisé en ce que la seconde ultrafiltration est effectuée à un pH de 6,5.

4. Procédé selon les revendications 1 à 3, caractérisé en ce que l'ultrafiltration est effectuée à une température n'excédant pas 50 °C.

5. Procédé selon les revendications 1 à 4, caractérisé en ce que, entre l'ultrafiltration à faible pH et l'ultrafiltration à pH élevé, le produit de rétention est soumis à une hydrolyse enzymatique.

6. Procédé selon la revendication 5, caractérisé en ce que l'hydrolyse enzymatique est effectuée au moyen d'une enzyme protéolytique pendant une durée de 15 minutes environ.

# Graph 1

Flux and pressure drop per stage during ultrafiltration of acidified skim milk with a 2-stage instalation
(Koch Membrane Systems . 10 and 7 Q m$^2$ ) at a volume reduction of 60%

Legend:
- x = stage 1
- o = stage 2

pH = 3,0

$T_{uf}$ = 50 °C

Pfeed = 0,5 bar

Qcir stage 1 = 9 m$^3$/h

Qcir stage 2 = 13 m$^3$/h

EP 0 467 482 B1

# Graph 2

Flux and pressure drop per stage during ultrafiltration of acidified skim milk with a 2-stage instalation
(Koch Membrane Systems . 10 and 7 Q m² ) at a volume reduction of 60%

Legend:

×  =  stage 1

o  =  stage 2

pH  =3,5

$T_{uf}$ =50 °C

Pfeed      =0,5 bar

Qcir stage 1 = 9 m³/h

Qcir stage 2 =13 m³/h

EP 0 467 482 B1

# Graph 3

Flux and pressure drop per stage during ultrafiltration of acidified skim milk with a 2-stage instalation
(Koch Membrane Systems . 10 and 7 Q m² ) at a volume reduction of 60%

x = stage 1
o = stage 2

pH = 4,0

$T_{uf}$ = 50 °C

Pfeed = 0,5 bar

Qcir stage 1 = 9 m³/h

Qcir stage 2 = 13 m³/h

EP 0 467 482 B1

# Graph 4

## Flux measurement as a function of the concentration
### Skim milk i.p. membrane spiral w. 10000 cut-off

flux  kg/m²h

concentration factor

—*— skim milk pH 2,0    - + - skim milk pH 2,5    ··*·· skim milk pH 3,0

—•— skim milk pH 3,5    —+— skim milk pH 4,0

EP 0 467 482 B1